# EUROPEAN PATENT APPLICATION

(11) **EP 3 312 852 A1**
(43) Date of publication of application: **25.04.2018**
(21) Application number: 17197640.0
(22) Date of filing: 20.10.2017
(51) Int. Cl.: H01F 7/16

(54) **ELECTROMAGNETIC ACTUATOR WITH FERROMAGNETIC PLUNGER**

(30) Priority: 21.10.2016 US 201615299737
(71) Applicant: Hamilton Sundstrand Corporation, Charlotte, NC 28217-4578 (US)
(72) Inventor: GIERAS, Jacek F., Glastonbury, CT 06033 (US)
(74) Representative: Hughes, Andrea Michelle

(57) **Abstract**

An electromagnetic actuator is provided including: a housing (140) having a longitudinal axis; a first ring coil (120a) within the housing and coaxial to the longitudinal axis; a second ring coil (120b) within the housing and coaxial to the longitudinal axis; a first magnetic member (130a) within the housing and coaxial to the longitudinal axis; a second magnetic member (130b) within the housing and coaxial to the longitudinal axis; and a ferromagnetic plunger (110) configured to fit within the first ring coil, the second ring coil, the first magnetic member, and the second magnetic member; wherein the first ring coil and the second ring coil are oriented in an alternating arrangement with the first magnetic member and the second magnetic member.

## Description

### BACKGROUND

The subject matter disclosed herein generally relates to an actuator system, and more specifically to an apparatus and a method for operating an electromagnetic actuator system.

Commonly electromagnetic actuators utilize a permanent magnet plunger within an electric coil. The permanent magnet plunger within the electric coil form what may be commonly referred to as a solenoid. Electrical current flowing through the coil creates an electromagnetic force that causes the permanent magnet plunger to move axially within the coil. In an example, short-stroke electromagnetic actuators may be driven by the electromagnetic force from two solenoids. However, this type of actuator suffers the inherent problem of high-energy consumption for operation, which causes the actuator to increase in temperature. In addition, catching the plunger requires that a large amount of current be supplied to the solenoid in a reasonably short time. Also, actuators with permanent magnet plungers may also suffer from demagnetization of permanent magnets due to vibration (high frequency vertical movement up and down).

### BRIEF DESCRIPTION

According to one embodiment, an electromagnetic actuator is provided. The electromagnetic actuator includes: a housing having a longitudinal axis; a first ring coil within the housing and coaxial to the longitudinal axis; a second ring coil within the housing and coaxial to the longitudinal axis; a first magnetic member within the housing and coaxial to the longitudinal axis; a second magnetic member within the housing and coaxial to the longitudinal axis; and a ferromagnetic plunger configured to fit within the first ring coil, the second ring coil, the first magnetic member, and the second magnetic member; wherein the first ring coil and the second ring coil are oriented in an alternating arrangement with the first magnetic member and the second magnetic member.

In addition to one or more of the features described above, or as an alternative, further embodiments of the electromagnetic actuator may include that the second ring coil is interposed between the first magnetic member and the second magnetic member; and the first magnetic member is interposed between the first ring coil and the second ring coil.

In addition to one or more of the features described above, or as an alternative, further embodiments of the electromagnetic actuator may include that the ferromagnetic plunger in operation moves in a first direction when first ring coil is energized and the ferromagnetic plunger in operation moves in a second direction when the second ring coil is energized.

In addition to one or more of the features described above, or as an alternative, further embodiments of the electromagnetic actuator may include that the second direction is opposite the first direction; and the first direction and second direction are parallel to the longitudinal axis.

In addition to one or more of the features described above, or as an alternative, further embodiments of the electromagnetic actuator may include that at least one of the first magnetic member and the second magnetic member holds the ferromagnetic plunger in place when the first ring coil and the second ring coil are not energized.

In addition to one or more of the features described above, or as an alternative, further embodiments of the electromagnetic actuator may include a rod having a first end and an opposing second end, the first end being fixedly connected to the ferromagnetic plunger, wherein the rod in operation moves in unison with the ferromagnetic plunger.

In addition to one or more of the features described above, or as an alternative, further embodiments of the electromagnetic actuator may include a valve control system operably connected to the rod proximate the second end, the valve control system in operation opens a valve when the ferromagnetic plunger moves in a second direction.

According to another embodiment, a method of assembling an electromagnetic actuator is provided. The method of assembling the electromagnetic actuator includes: installing a first ring coil into a housing, the housing having a longitudinal axis and the first ring coil being coaxial to the longitudinal axis; installing a first magnetic member into the housing, the first magnetic member being coaxial to the longitudinal axis; installing a second ring coil into the housing, the second ring coil being coaxial to the longitudinal axis; installing a second magnetic member into the housing, the second magnetic member being coaxial to the longitudinal axis; and installing a ferromagnetic plunger within the first ring coil, the second ring coil, the first magnetic member, and the second magnetic member, the ferromagnetic plunger being coaxial to the longitudinal axis; wherein the first ring coil and the second ring coil are oriented in an alternating arrangement with the first magnetic member and the second magnetic member.

In addition to one or more of the features described above, or as an alternative, further embodiments of the method of assembling the electromagnetic actuator may include that the second ring coil is interposed between the first magnetic member and the second magnetic member; and the first magnetic member is interposed between the first ring coil and the second ring coil.

In addition to one or more of the features described above, or as an alternative, further embodiments of the method of assembling the electromagnetic actuator may include that the ferromagnetic plunger in operation moves in a first direction when first ring coil is energized and the ferromagnetic plunger in operation moves in a second direction when the second ring coil is energized.

In addition to one or more of the features described above, or as an alternative, further embodiments of the method of assembling the electromagnetic actuator may include that the second direction is opposite the first direction; and the first direction and second direction are parallel to the longitudinal axis.

In addition to one or more of the features described above, or as an alternative, further embodiments of the method of assembling the electromagnetic actuator may include that at least one of the first magnetic member and the second magnetic member holds the ferromagnetic plunger in place when the first ring coil and the second ring coil are not energized.

In addition to one or more of the features described above, or as an alternative, further embodiments of the method of assembling the electromagnetic actuator may include fixedly connecting a rod to the ferromagnetic plunger, the rod having a first end and an opposing second end, wherein the first end is fixedly connected to the ferromagnetic plunger and the rod in operation moves in unison with the ferromagnetic plunger.

In addition to one or more of the features described above, or as an alternative, further embodiments of the method of assembling the electromagnetic actuator may include operably connecting a valve control system to the rod proximate the second end, the valve control system in operation opens a valve when the ferromagnetic plunger moves in a second direction.

According to another embodiment, a method of operating an electromagnetic actuator is provided. The method of operating an electromagnetic actuator including: energizing a first ring coil that in operation generates a first electromagnetic force; moving a ferromagnetic plunger using the first electromagnetic force in a first direction from a first position to a second position; de-energizing the first ring coil when the ferromagnetic plunger is at the second position; and holding the ferromagnetic plunger at the second position for a first selected period of time using at least one of a first magnetic member and a second magnetic member.

In addition to one or more of the features described above, or as an alternative, further embodiments of the method of operating the electromagnetic actuator may include: energizing a second ring coil that in operation generates a second electromagnetic force; moving a ferromagnetic plunger using the second electromagnetic force in a second direction from the second position to the first position; de-energizing the second ring coil when the ferromagnetic plunger is at the first position; and holding the ferromagnetic plunger at the second position for a second selected period of time using at least one of a first magnetic member and a second magnetic member.

In addition to one or more of the features described above, or as an alternative, further embodiments of the method of operating the electromagnetic actuator may include that the second ring coil is interposed between the first magnetic member and the second magnetic member; and the first magnetic member is interposed between the first ring coil and the second ring coil.

In addition to one or more of the features described above, or as an alternative, further embodiments of the method of operating the electromagnetic actuator may include that the ferromagnetic plunger is located within the first ring coil, the second ring, the first magnetic member, and the second magnetic member.

In addition to one or more of the features described above, or as an alternative, further embodiments of the method of operating the electromagnetic actuator may include moving a rod having a first end and a second end when the ferromagnetic plunger moves, the first end being fixedly connected to the ferromagnetic plunger; wherein the rod in operation moves in unison with the ferromagnetic plunger.

In addition to one or more of the features described above, or as an alternative, further embodiments of the method of operating the electromagnetic actuator may include closing a valve of a valve control system when ferromagnetic plunger moves to the second position, the valve control system being operably connected to the rod proximate the second end.

Technical effects of embodiments of the present disclosure include moving a ferromagnetic plunger between two positions utilizing alternating energization of at least two electrical coils and maintaining the position of the ferromagnetic plunger by deactivating the all electrical coils and utilizing permanent magnets.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The subject matter is particularly pointed out and distinctly claimed at the conclusion of the specification. The foregoing and other features, and advantages of the present disclosure are apparent from the following detailed description taken in conjunction with the accompanying drawings in which:
FIG. 1 is a longitudinal section view of an electromagnetic actuator, according to an embodiment of the present disclosure;
FIG. 2 is a longitudinal section view of a valve control system that may incorporate the electromagnetic actuator of FIG. 1, according to an embodiment of the present disclosure;
FIG. 4 is a flow process illustrating a method of operating the electromagnetic actuator of FIGs. 1-2, according to an embodiment of the present disclosure; and
FIG. 5 is a flow process illustrating a method of assembling the electromagnetic actuator of FIGs. 1-2, according to an embodiment of the present disclosure.

The detailed description explains embodiments of the present disclosure, together with advantages and features, by way of example with reference to the drawings.

### DETAILED DESCRIPTION

A detailed description of one or more embodiments of the disclosed apparatus and method are presented herein by way of exemplification and not limitation with reference to the Figures.

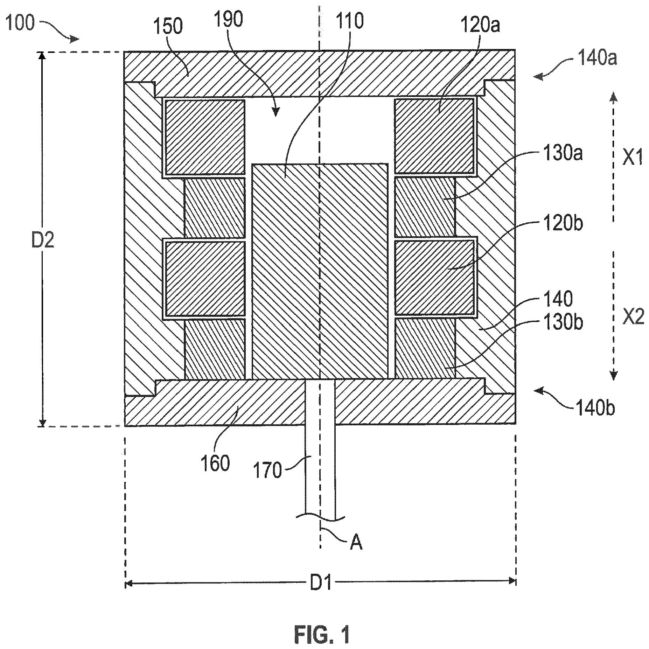

Referring now to FIGs. 1-2, an electromagnetic actuator 100 is illustrated. The electromagnetic actuator 100 can be used to actuate a rod 170 in a first direction X1 and in a second direction X2 opposing the first direction X1. As seen in FIG. 1, the electromagnetic actuator 100 is composed of a ferromagnetic plunger 110 enclosed within a first ring coil 120a, a second ring coil 120b, a first magnetic member 130a, and a second magnetic member 130b. As the ferromagnetic plunger 110 moves in the first direction X1 and second direction X2, the reluctance for magnetic flux changes. When one of the ring coils 120a, 120b is excited with current, the ferromagnetic plunger 110 takes a position corresponding to minimal reluctance for the magnetic flux. In an embodiment, the first ring coil 120a, the second ring coil 120b, the first magnetic member 130a, and the second magnetic member 130b are ring shaped and the ferromagnetic plunger 110 is cylindrical and configured to fit within the first ring coil 120a, the second ring coil 120b, the first magnetic member 130a, and the second magnetic member 130b. In an alternate embodiment, the first ring coil 120a, the second ring coil 120b, the first magnetic member 130a, and the second magnetic member 130b are rectilinearly shaped (square, pentagon, hexagon, and so on and so forth) and the ferromagnetic plunger 110 is rectilinear and configured to fit within the first ring coil 120a, the second ring coil 120b, the first magnetic member 130a, and the second magnetic member 130b.

As seen in FIG. 1, the first ring coil 120a, the second ring coil 120b, the first magnetic member 130a, and the second magnetic member 130b are located within an inner chamber 190 of a housing 140. The housing 140 has a longitudinal axis A. As also seen in FIG. 1, the first ring coil 120a, the second ring coil 120b, the first magnetic member 130a, and the second magnetic member 130b are oriented coaxial to the longitudinal axis A within the inner chamber 190. As further seen in FIG. 1, the arrangement of the ring coils 120a, 120b along the longitudinal axis A alternates with the magnetic members 130a, 130b. This alternating arrangement means that the magnetic members 130a, 130b are separated by at least one ring coil and then the ring coils 120a, 120b are separated by at least one magnetic member. In the example of FIG. 1, the second ring coil 120b is interposed between the first magnetic member 130a and the second magnetic member 130b and then subsequently the first magnetic member 130a may be interposed between the first ring coil 120a and the second ring coil 120b. As may be appreciated by one of skill in the art the number of or specific arrangement of the ring coils and magnetic members may change as long as the alternating arrangement between ring coils and magnetic members is maintained. In an embodiment, the first magnetic member 130a and the second magnetic member 130b are permanent magnets. In an alternate embodiment, the first magnetic member 130a and the second magnetic member 130b are electrical coils that generate an electrical field when energized (i.e. supplied with electrical current).

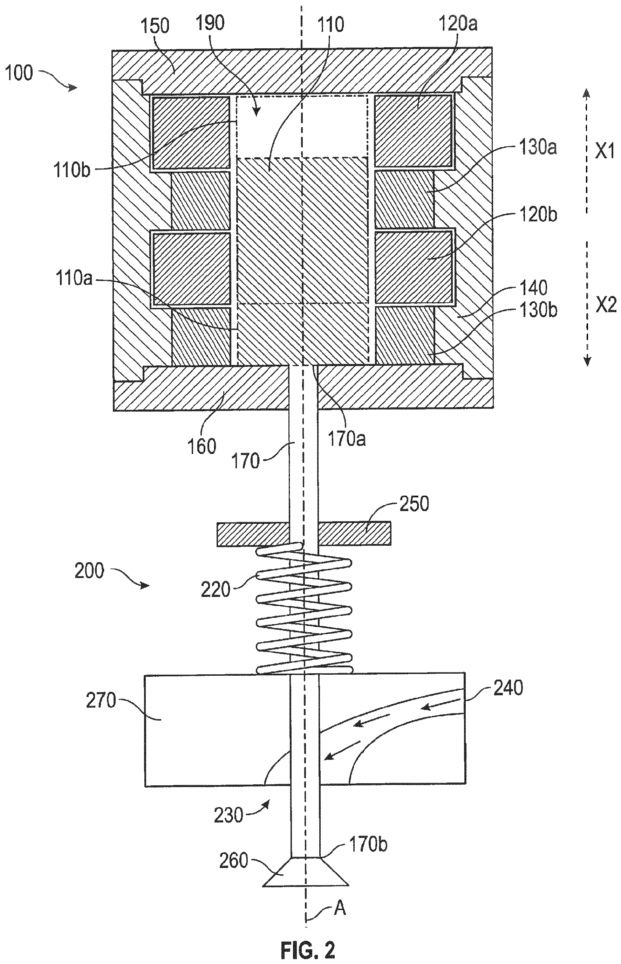

The housing 140 defines the inner chamber 190. In the illustrated embodiment, the housing 140 and the inner chamber 190 are cylindrical in shape. The housing 140 includes a first cover 150 located at a first end 140a of the housing 140 and a second cover 160 located at a second end 140b of the housing 140 to enclose the inner chamber 190 at both ends 140a, 140b of the housing 140, as seen in FIG. 1. One of the covers may include a hole through which the rod 170 may fixedly connect to the ferromagnetic plunger 110. The rod includes a first end 170a and an opposing second end 170b. In the example of FIG. 2, the first end 170a is fixedly connected to the ferromagnetic plunger 110. In an embodiment, the rod 170 is oriented parallel with the longitudinal axis A. As the ferromagnetic plunger 110 moves in either direction X1 or direction X2, the rod 170 will move with the ferromagnetic plunger 110.

As seen in FIG. 2, the rod 170 may be operably connected to a valve control system 200 proximate the second end 170b. The valve control system 200 can be used to open and close a valve 230 as the rod 170 moves in the second direction X2 and the first direction X1. As seen in FIG. 2, the valve control system 200 includes a valve cover 260 fixedly attached to the rod 170, a moving collar 250 operably connected to the rod 170, and a spring 220 located between the collar 250 and a valve housing 270. When the ferromagnetic plunger 110, the rod 170, and the valve cover 260 moves in the second direction X2, the valve 230 will open allowing a fluid 240 to move through the valve 230. The spring 220 may provide a damping force to the motion of the rod 170 and/or a force to help move the rod 170 in the first direction X1 and close the valve 230.

Advantageously, the compact design of the electromagnetic actuator 100 in the present disclosure allows for a high force density. In an embodiment, the electromagnetic actuator 100 may have an outer diameter D1 of about 48 millimeters (1.88976 inches), an axial length D2 of about 43 millimeters (1.69291 inches), and produces a force on the rod 170 of about 319 newtons (71.7141 pound-force), which means that the electromagnetic actuator 100 has a force density of about 4.0 x 106 N/m3 (2.61 x 104 lbf/ft3).

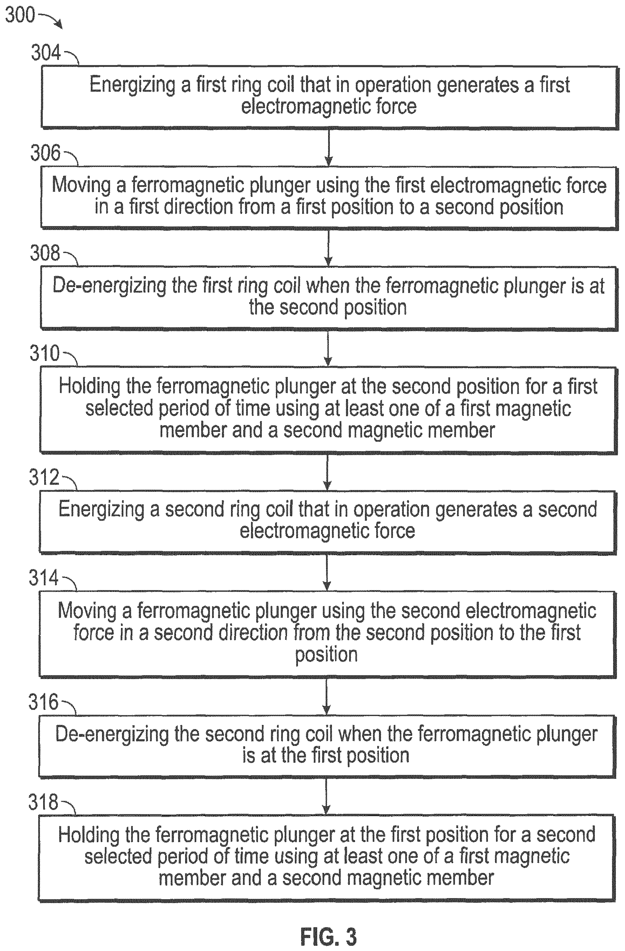

Referring now to FIG. 3, while referencing components of the electromagnetic actuator 100 of FIGs. 1-2, FIG. 3 shows a flow process illustrating a method 300 of operating the electromagnetic actuator 100 of FIGs. 1-2, according to an embodiment of the present disclosure. As mentioned above, as the ferromagnetic plunger 110 moves in the first direction X1 and second direction X2, the reluctance for magnetic flux changes. When one of the ring coils 120a, 120b is excited with current, the ferromagnetic plunger 110 takes a position corresponding to minimal reluctance for the magnetic flux. For method 300 assumes, the ferromagnetic plunger 110 starts in a first position 110a proximate the second cover 160, as seen in FIG. 2.

At block 304, the first ring coil 120a is energized (i.e. supplied with electrical current). When the first ring coil 120a is energized, a first electromagnetic force is generated. As mentioned above, the ferromagnetic plunger 110 will take a position corresponding to minimal reluctance for magnetic flux. When the electromagnetic force is generated by the first ring coil 120a the ferromagnetic plunger 110 will move in the first direction X1 from the first position 110a to a second position 110b at block 306, as seen in FIG. 2. At block 308, the first ring coil 120a is de-energized (i.e. electrical current is removed). At block 310 the ferromagnetic plunger 110 is held at the second position 110b for a first selected period of time using at least one of the first magnetic member 130a and the second magnetic member 130b. In the embodiment where the first magnetic member 130a and the second magnetic member 130b are permanent magnets, the magnetic field of at least one of the first magnetic member 130a and the second magnetic member 130b would hold the ferromagnetic plunger at the second position. In the embodiment where the first magnetic member 130a and the second magnetic member 130b are electrical coils, at least one of the first magnetic member 130a and the second magnetic member 130b would have to be energized to generate a magnetic field and hold the ferromagnetic plunger at the second position.

Next at block 312, the second ring coil 120b is energized (i.e. supplied with electrical current). When the second ring coil 120b is energized, a second electromagnetic force is generated. When the second electromagnetic force is generated by the second ring coil 120b the ferromagnetic plunger 110 will move in the second direction X2 from the second position 110b to the first position 110a at block 314. At block 316, the second ring coil 120b is de-energized (i.e. electrical current is removed). At block 318 the ferromagnetic plunger 110 is held at the first position 110a for a second selected period of time using at least one of the first magnetic member 130a and the second magnetic member 130b. In the embodiment where the first magnetic member 130a and the second magnetic member 130b are permanent magnets, the magnetic field of at least one of the first magnetic member 130a and the second magnetic member 130b would hold the ferromagnetic plunger at the first position. In the embodiment where the first magnetic member 130a and the second magnetic member 130b are electrical coils, at least one of the first magnetic member 130a and the second magnetic member 130b would have to be energized to generate a magnetic field and hold the ferromagnetic plunger at the first position.

As mentioned above, the ferromagnetic plunger 110 may be fixedly attached to a rod 170 and the rod 170 may be operably connected to a valve control system 200 as seen in FIG. 2 and described above. In the illustrated embodiment of FIG. 2, as the ferromagnetic plunger 110 moves in the first direction X1 from the first position 110a to the second position the valve 230 may close and as the ferromagnetic plunger 110 moves in the second direction X2 from the second position 110b to the first position 110a the valve 230 may open. Alternatively, as may be appreciated by one of skill as the ferromagnetic plunger 110 moves in the first direction X1 from the first position 110a to the second position 110b the valve 230 may open and as the ferromagnetic plunger 110 moves in the second direction X2 from the second position 110b to the first position 110a the valve 230 may close. As may be appreciated by one of skill in the art, the ferromagnetic plunger 110 may be utilized for any short stroke and/or high load actuator application, such as, for example aircraft control surfaces, reciprocating pumps, and reciprocating compressors.

Advantageously, by only energizing the ring coils 120a, 120b when moving the plunger, the electromagnetic actuator 100 could be energized with short-time current pulses resulting in low energy consumption and low joule losses. Also advantageously, by energizing the ring coils 120a, 120b with short term pulses, it allows increase controllability of the electromagnetic actuator 100. In an embodiment, the short-time current pulses may be between about 4 - 10 milliseconds. In another embodiment, the short-time current pulses may be released from a capacitor.

While the above description has described the flow process of FIG. 3 in a particular order, it should be appreciated that unless otherwise specifically required in the attached claims that the ordering of the steps may be varied.

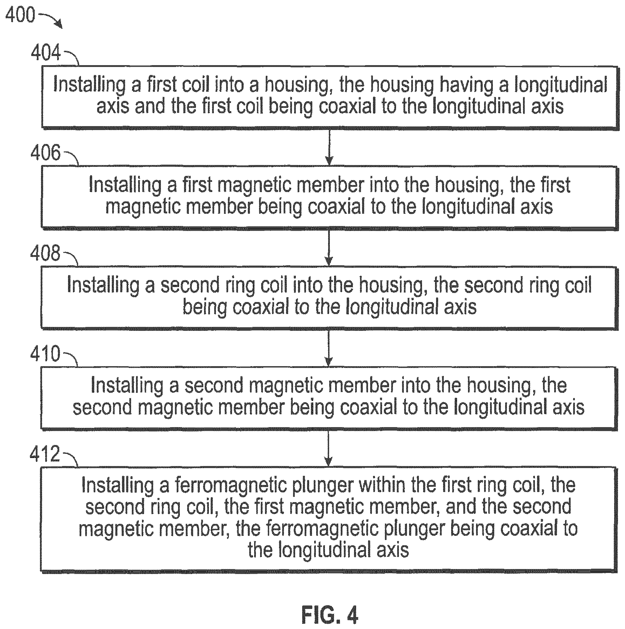

Referring now to FIG. 4, while referencing components of the electromagnetic actuator 100 of FIGs. 1-2, FIG. 4 shows a flow process illustrating a method 400 of assembling the electromagnetic actuator 100 of FIGs. 1-2, according to an embodiment of the present disclosure. At block 404, the first ring coil 120a is installed into the housing 140. The housing 140 has a longitudinal axis A as described above and the first ring coil 120a is coaxial to the longitudinal axis A. At block 406, the first magnetic member 130a is installed into the housing 140. The first magnetic member 130a is coaxial to the longitudinal axis A. At block 408, the second ring coil 120b is installed into the housing 140. The second ring coil 120b is coaxial to the longitudinal axis A. At block 410, the second magnetic member 130b is installed into the housing 140. The second magnetic member 130b is coaxial to the longitudinal axis A. At block 412, the ferromagnetic plunger 110 is installed within the first ring coil 120a, the second ring coil 120b, the first magnetic member 130a, and the second magnetic member 130b. The ferromagnetic plunger 110 is coaxial to the longitudinal axis A.

The method 400 may include fixedly connecting a rod 170 to the ferromagnetic plunger 110. As mentioned above the rod 170 had a first end 170a and an opposing second end 170b. In an embodiment, the first end 170a is fixedly connected to the ferromagnetic plunger 110 and the rod 170 in operation moves in unison with the ferromagnetic plunger 110. The method 400 may also include operably connecting a valve control system 200 to the rod 170 proximate the second end 170b. The valve control system 200 may in operation open a valve 230 when the ferromagnetic plunger 110 moves in the second direction X2.

While the above description has described the flow process of FIG. 4 in a particular order, it should be appreciated that unless otherwise specifically required in the attached claims that the ordering of the steps may be varied.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present invention as defined by the claims. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. An electromagnetic actuator comprising:
a housing (140) having a longitudinal axis;
a first ring coil (120a) within the housing and coaxial to the longitudinal axis;
a second ring coil (120b) within the housing and coaxial to the longitudinal axis;
a first magnetic member (130a) within the housing and coaxial to the longitudinal axis;
a second magnetic member (130b) within the housing and coaxial to the longitudinal axis; and
a ferromagnetic plunger (110) configured to fit within the first ring coil, the second ring coil, the first magnetic member, and the second magnetic member;
wherein the first ring coil and the second ring coil are oriented in an alternating arrangement with the first magnetic member and the second magnetic member.

2. The electromagnetic actuator of claim 1, wherein:
the second ring coil (120b) is interposed between the first magnetic member (130a) and the second magnetic member (130b); and
the first magnetic member (130a) is interposed between the first ring coil (120a) and the second ring coil (120b).

3. The electromagnetic actuator of claim 1 or 2, wherein:
the ferromagnetic plunger (110) in operation moves in a first direction when first ring coil (120a) is energized and the ferromagnetic plunger in operation moves in a second direction when the second ring coil (120b) is energized.

4. The electromagnetic actuator of claim 3, wherein:
the second direction is opposite the first direction; and
the first direction and second direction are parallel to the longitudinal axis.

5. The electromagnetic actuator of any preceding claim, wherein:
at least one of the first magnetic member (130a) and the second magnetic member (130b) holds the ferromagnetic plunger (110) in place when the first ring coil (120a) and the second ring coil (120b) are not energized.

6. The electromagnetic actuator of any preceding claim, further comprising:
a rod (170) having a first end (170a) and an opposing second end (174b), the first end being fixedly connected to the ferromagnetic plunger, wherein the rod in operation moves in unison with the ferromagnetic plunger.

7. The electromagnetic actuator of claim 6, further comprising:
a valve control system (200) operably connected to the rod proximate the second end, the valve control system in operation opens a valve when the ferromagnetic plunger moves in a second direction.

8. A method of assembling an electromagnetic actuator comprising:
installing a first ring coil into a housing, the housing having a longitudinal axis and the first ring coil being coaxial to the longitudinal axis;
installing a first magnetic member into the housing, the first magnetic member being coaxial to the longitudinal axis;
installing a second ring coil into the housing, the second ring coil being coaxial to the longitudinal axis;
installing a second magnetic member into the housing, the second magnetic member being coaxial to the longitudinal axis; and
installing a ferromagnetic plunger within the first ring coil, the second ring coil, the first magnetic member, and the second magnetic member, the ferromagnetic plunger being coaxial to the longitudinal axis;
wherein the first ring coil and the second ring coil are oriented in an alternating arrangement with the first magnetic member and the second magnetic member.

9. The method of claim 8, wherein:
the second ring coil is interposed between the first magnetic member and the second magnetic member; and
the first magnetic member is interposed between the first ring coil and the second ring coil.

10. The method of claim 8, wherein:
the ferromagnetic plunger in operation moves in a first direction when first ring coil is energized and the ferromagnetic plunger in operation moves in a second direction when the second ring coil is energized.

11. The method of claim 10, wherein:
the second direction is opposite the first direction; and
the first direction and second direction are parallel to the longitudinal axis.

12. The method of claim 8, wherein:
at least one of the first magnetic member and the second magnetic member holds the ferromagnetic plunger in place when the first ring coil and the second ring coil are not energized.

13. The method of claim 8, further comprising:
fixedly connecting a rod to the ferromagnetic plunger, the rod having a first end and an opposing second end, wherein the first end is fixedly connected to the ferromagnetic plunger and the rod in operation moves in unison with the ferromagnetic plunger.

14. The method of claim 13, further comprising:
operably connecting a valve control system to the rod proximate the second end, the valve control system in operation opens a valve when the ferromagnetic plunger moves in a second direction.
